# EUROPÄISCHE PATENTSCHRIFT

(11) **EP 1 921 645 B1**
(45) Veröffentlichungstag und Bekanntmachung des Hinweises auf die Patenterteilung: **02.11.2011**
(21) Anmeldenummer: 08003637.9
(22) Anmeldetag: 08.04.2005
(51) Int. Cl.: H01H 31/12, H01H 85/20, H02B 1/18

(54) **Sockeleinheit mit Ableitschiene**
Base unit with connecting bar
Unité de base avec barre de connexion

(30) Priorität: 09.04.2004 PL 36704904
(43) Veröffentlichungstag der Anmeldung: 14.05.2008
(62) Teilanmeldung aus: 05007766.8
(73) Patentinhaber: APATOR S.A., 87100 Torun (PL)
(72) Erfinder: Szarzynski, Krzysztof, 88-320 Strzelno (PL); Luczak, Robert, 87-800 Wloclawek (PL); Nowakowski, Henryk, 87-100 Torun (PL); Wiatrowski, Wladyslaw, 87-100 Torun (PL)
(74) Vertreter: Hoffmeister, Helmut

(56) Entgegenhaltungen:
- EP-A- 0 013 963
- DE-A1- 1 640 587
- DE-A1- 1 805 354
- DE-A1- 2 032 537
- DE-A1- 2 351 020
- DE-U- 1 947 579
- DE-U- 7 508 023
- DE-U1- 8 211 130
- DE-U1- 8 419 627
- DE-U1- 29 512 870

## Beschreibung

Die Erfindung betrifft eine Sockeleinheit für eine elektrische Schaltvorrichtung, letztere umfassend die Sockeleinheit und ein mit dieser verbundenes Gehäuse, wobei die Sockeleinheit eine Sicherungsleiste umfasst, in die wenigstens zwei Ableitschienen eingebaut sind, die in seitlichen Führungsnuten gehalten sind.

Aus der EP 0 563 530 A1 ist eine Lastschaltleiste mit einem Gehäuse und Schalterdeckel mit einem plattenförmigen Sicherungselement bekannt. Das Sicherungselement hat Vorsprünge, die in spezielle Aussparungen des Gehäuses einrasten.

In DE 296 05 800 U1 ist eine Lastschaltleiste mit einer an ihrem Deckel gelagerten Klappe dargestellt, an der Ansatzstücke angeordnet sind, die die Länge der am Deckel angeordneten Langlöcher begrenzen. Die Lastschaltleiste besitzt ein Gehäuse, das in Ruhestellung gebracht werden kann. An einem Ende des Gehäuses sind Halterungen drehbar gelagert, an denen wiederum Deckeleinsätze zum Festlegen von Sicherungseinsätzen angebracht sind. Die Halterungen sind an einem zweiten Ende des Gehäuses mit einem Gestänge drehbar aufgenommen. In einer sogenannten Deponielage, d. h. in Ruhestellung befinden sich die an den Deckeleinsätzen angeordneten und an den Halterungen befestigten Sicherungseinsätze außerhalb des Gehäuses.

Bekannt sind auch Konstruktionslösungen für Trennschalter, deren Deckel ein verschiebbares Element aufweist, welches nach dem Ausschalten die Bewegung eines Schalthebels begrenzt und dadurch das Herausnehmen des Deckels verhindert.

Es sind auch Schalter mit Schienenanordnungen bekannt, bei denen die Schienen auf unterschiedliche Weise herstellbar sind, zum Beispiel durch einstückiges Ausstanzen von Schienen aus einer Blechtafel und Biegen des Blechschnitts an entsprechenden Stellen um 90°. Dieses Herstellungsverfahren bringt einen großen Stanzabfall mit sich.

Bei einem weiteren Verfahren zur Herstellung von Schienen werden die Schienenteile zwecks Erzielung einer erforderlichen Gestaltung miteinander vernietet, verschweißt oder verschraubt werden.

Aus DE 101 15 103 A1 ist eine Lastschaltleiste mit einem an ihrem Deckel angeordneten, plattenförmigen Sperrelement mit Rastnocken bekannt. Die Rastnocken rasten in entsprechende Nuten am Gehäuse ein.

Außerdem sind Konstruktionen bekannt, bei denen eine Aufhängung am Gehäuse des Trennschalters eines um 180° gewendeten Deckels mit daran befestigten Schmelzstöpseln möglich ist.

Weiterhin ist eine Lastschaltleiste bekannt, die einen starren, mechanischen Schalthebel aufweist, an dem ein Verbindungselement als Drehzapfen ausgebildet ist, welcher wiederum in einem an einer Seitenwand eingearbeiteten Langloch geführt ist. Ein anderes Verbindungselement am Schalthebel liegt in Form eines Lagerzapfens vor, der in einer länglichen Ausnehmung an der Seitenwand geführt ist.

EP-A-0013963 zeigt eine Sockeleinheit, die sich u. a. aus einer Sicherungssockelleiste und Anschluss- und Ableitschienen zusammensetzt. Die Sicherungssockelleiste weist zwei zueinander parallel angeordnete, längliche Seitenwände auf und ist mit quer verlaufenden Verbindungsbolzen versteift. Die zueinander spiegelbildlich angeordneten, seitlichen Ableitschienen stehen nahezu auf ihrer ganzen Länge in Kontakt mit den Seitenwänden und sind dort befestigt. Auf der Innenseite der Seitenwände sind zwei zueinander parallel angeordnete, längs der Sicherungssockelleiste verlaufende Stege eingeformt, die als Festlegungselemente für die Ableitschienen vorgesehen sind. Es sind auch andere Festlegungselemente für die Ableitschienen, nämlich nach innen gerichtete Zapfen vorgesehen, die ebenso an der Innenseite der Seitenwände angeordnet sind, deren Aufgabe es ist, die Ableitschienen gegen längliche Verschiebungen zu sichern. Die Zapfen greifen in entsprechende Öffnungen in der Ableitschiene ein. Eine dritte, kürzere Ableitschiene ist zweiteilig aufgebaut.

Aus DE 2351020 A1 geht hervor, dass die Anordnung von Ableitschienen der des EP-A-0013963 ähnlich ist, d. h. zwischen den beiden seitlichen Ableitschienen liegt eine dritte, kürzere. Ein Leistenkorpus besteht aus einigen hintereinander längsaxial angeordneten und miteinander verbundenen Teilen. Die seitlichen Ableitschienen sind in längs der Leiste verlaufenden Nuten (17, 18) untergebracht, die zugleich Teil einer Verriegelungsvorrichtung sind, die die hintereinander liegenden Teile vor dem Lösen sichert. Außerdem sind die seitlichen Ableitschienen fest mit den Kontaktelementen (16, 16') verbunden.

DE 2032537 A1 zeigt eine vertikal montierbare Verteilersäule, deren rechteckiges Gehäuse u. a. zwei seitliche Ableitschienen beinhaltet. Die Ableitschienen sind an zwei sich gegenüber liegenden Seitenwänden des Gehäuses, ähnlich wie bei BP-A-0013963, angeordnet und mit seitlichen Leisten festgelegt, die die Halterillen (16, 18) bilden. Die klemmseitigen Enden der Ableitschienen gehen jeweils durch einen an einer unteren Gehäusewand eingebrachten Schlitz hindurch und sind dort zusätzlich festgelegt.

Dokument 1947579 U beschreibt eine Sicherheitsleiste, die gemäß Anspruch 13 der Beschreibung Ableitschienen (16, 17) aufweist, die ähnlich wie bei DE 2351020 A1 in Längsnuten (19) des Isolationskorpus der Leiste untergebracht sind.

Bei DE 8419627 U handelt es sich um Abdeckungen für die Zuführungsschienen. Die letzteren sind an den Seitenwänden der Sicherheitsleiste angeordnet und mit der Sicherheitsleiste sowie mit den Kontakten verschraubt.

Das Dokument DE 1805354 A1 zeigt eine kompakte Sicherheitsleiste mit Ableitschienen, die in seitlichen, von unten offenen Kanälen der Sicherheitsleiste untergebracht sind. An den Ableitschienen sind Kontakte befestigt.

Dem Dokument DE 8211130 U1 sind Ableitschienen zu entnehmen, die formschlüssig in entsprechenden Längsnuten der Sicherheitsleiste angeordnet sind. Zu diesem Zweck sind die Längsnuten an ihren Enden breiter ausgeführt und an Verdickungen der Ableitschienen an ihren klemmseitigen Enden angepasst. Das Dokument DE 8211130 U1 bildet den Stand der Technik als Ausgangspunkt für die vorliegende Anmeldung.

In Dokument DE 1640587 A1 (Zusatzpatent zur Patentanmeldung DE 1 640 516) sind Schlitze (34) dargestellt, die in den Anschluss- und Ableitschienen ausgestanzt sind. Die Enden der Schlitze gehen in Kontaktglieder über. Die Kontaktglieder sind damit einstückig mit den Schienen ausgeführt.

Die bekannten Sicherungssockel weisen entsprechend profilierte Schienen auf, an denen zwecks Befestigung Öffnungen zur Aufnahme von Verbindungsschrauben eingebracht sind.

Aufgabe der Erfindung ist es, eine Sockeleinheit mit einer Ableitschiene mit verbesserten Funktionen bereitzustellen, die schmeller und einfacher in eine elektrische Schaltvorrichtung integriert werden kann.

Diese Aufgabe wird mit einer Sockeleinheit gemäß Anspruch 1 gelöst, bei der die zwei Ableitschienen mittels Halteclipsen, die Teil der Sicherungsleiste sind, an der Sicherungsleiste festgelegt sind.

Vorteilhafte Fortbildungen sind durch die Unteransprüche gekennzeichnet.

Der Gegenstand der Erfindung wird in Ausführungsbeispielen anhand der Zeichnung veranschaulicht. Die Figuren der Zeichnung zeigen:
- Fig. 1: einen Lastschalter in perspektivischer Darstel- lung;
- Fig. 2: einen Sicherungssockel in perspektivischer Dar- stellung;
- Fig. 3: zeigt den Sicherungssockel in Explosionsdar- stellung und in perspektivischer Darstellung;
- Fig. 4: zeigt den Sicherungssockel;
- Fig. 5: zeigt den Befestigungssitz eines Sicherungsso- ckels in perspektivischer Darstellung;
- Fig. 6: zeigt die erste Ableitschiene;
- Fig. 7: zeigt die zweite Ableitschiene;
- Fig. 8: zeigt die dritte Ableitschiene;
- Fig. 9: zeigt eine perspektivische Darstellung des Lastschalters im geöffneten Zustand;
- Fig. 10: zeigt das Innere des Schalters in Seitenan- sicht;
- Fig. 11: zeigt ein Detail A des in Fig. 10 abgebildeten Schalters;
- Fig. 12: zeigt den elektrischen Schalter in Ruhestel- lung;
- Fig. 13: zeigt das Detail B des in der Fig. 12 abgebil- deten Schalters;
- Fig. 14: zeigt einen Querschnitt C-C des in Fig. 12 ab- gebildeten Schalters;
- Fig. 15: zeigt ein Detail D des zweiten, in der Fig. 14 abgebildeten Sperrelementes.

In einer beispielhaft dargestellten Ausführungsform umfasst der elektrische Schalter eine Sockeleinheit 1, ein mit dieser verbundenes Gehäuse 2 und eine Deckeleinheit 3.

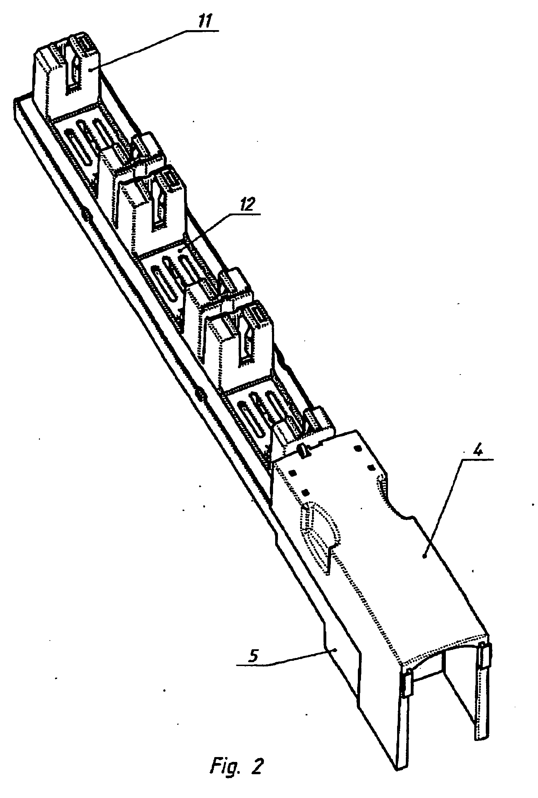

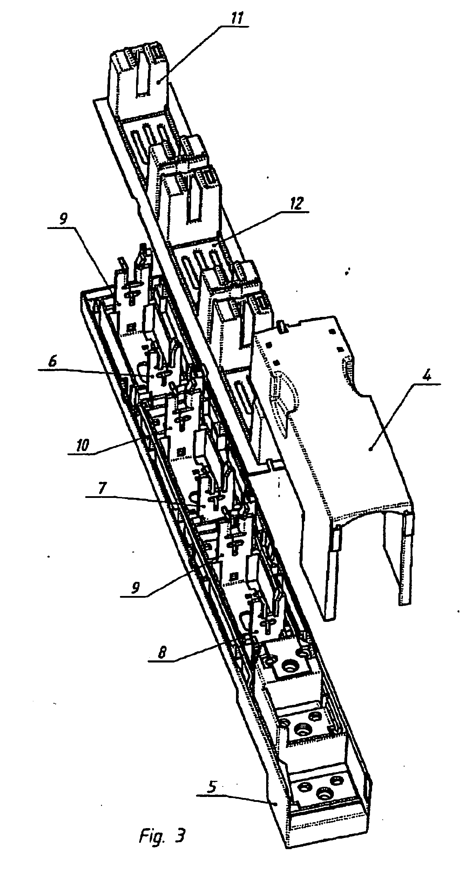

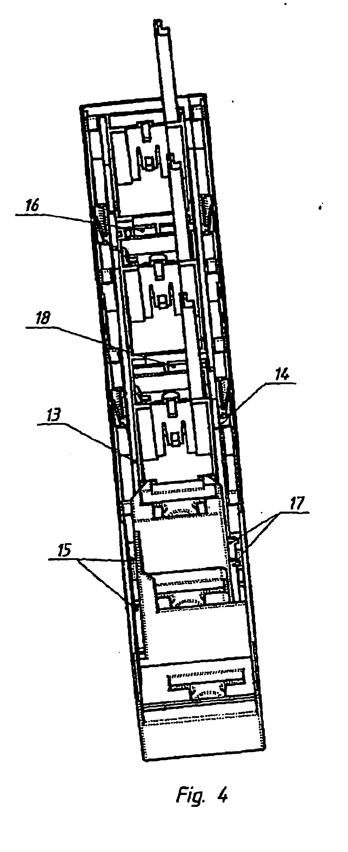

Die Sockeleinheit 1 gemäß den Figuren 2 und 3 umfasst eine Sicherungssockelleiste 5, eine erste, zweite und dritte Ableitschiene 6, 7 und 8 und eine erste und zweite Anschlussschiene 9, 10. Weiterhin sind Kontaktabdeckungen 11, Abdeckplättchen 12 und eine Klemmhaube 4 vorhanden. Die Sicherungssockelleiste 5 besitzt ferner (vgl. Fig. 4) eine erste Führungsnut 13 zur Halterung der ersten Ableitschiene 6 und eine zweite Führungsnut 14 zur Halterung der zweiten Ableitschiene 7. Die Sicherungssockelleiste 5 besitzt außerdem Halteclipse zur Befestigung der Ableitschienen, und zwar einen ersten Halteclip 15 und einen zweiten Halteclip 16 zur Befestigung der ersten Ableitschiene 6, sowie einen dritten Halteclip 17 und einen vierten Halteclip 18 zur Befestigung der zweiten Ableitschiene 7.

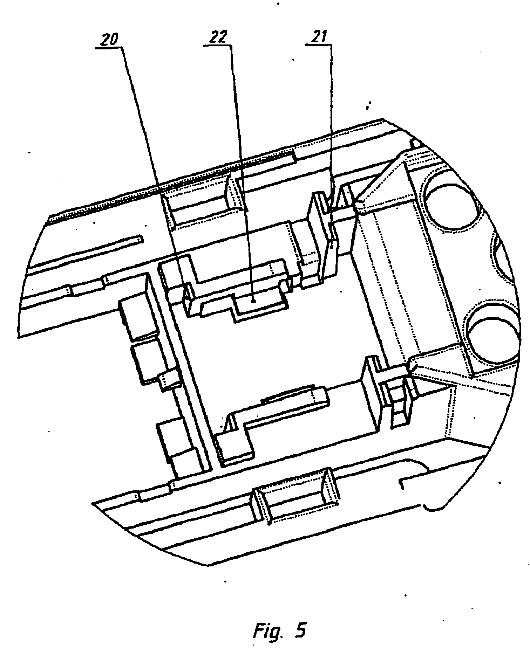

Bei dem in Fig. 5 dargestellten Befestigungssitz der Sicherungssockelleiste sind dritte Führungselemente 20 und vierte Führungselemente 21 dargestellt, in die die dritte Ableitschiene 8 einzuschieben ist. Nach dem vollständigen Einschieben der dritten Ableitschiene 8 in die Führungselemente 20 und 21 lässt sich die dritte Ableitschiene 8 durch Haltclipse 22 festlegen.

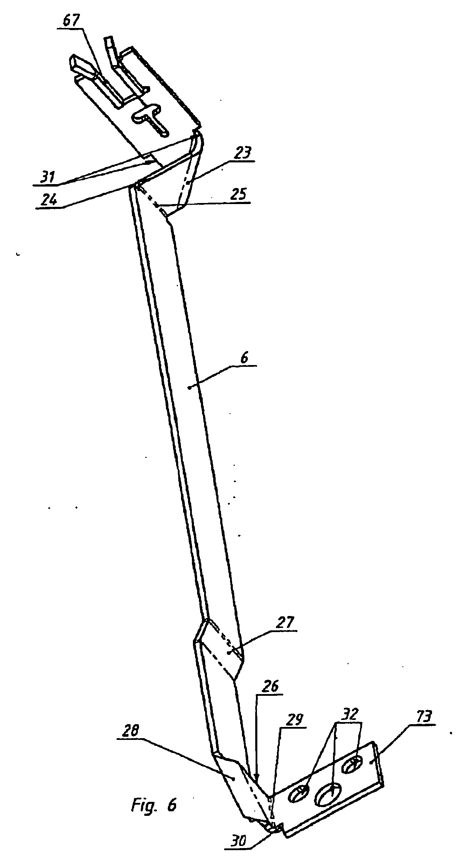

Die Figuren 6, 7 und 8 zeigen in perspektivischer Darstellung die Ableitschienen. Die Ableitschienen 6, 7 und 8 sowie die Anschlussschienen 9 und 10 zeichnen sich dadurch aus, dass diese Elemente jeweils aus einem Flacheisen einstückig hergestellt sind.

Die erste Ableitschiene 6 (Fig. 6) besitzt in ihrem oberen Teil eine erste Drehbiegung um einen Winkel 180°, deren Biegelinie 23 unter einem Winkel 45° gegenüber einer ersten Biegekante 24 angeordnet ist. Eine weitere, zweite Biegung im oberen Teil weist einen Biegewinkel von 90° auf und ihre Biegelinie 25 verläuft senkrecht zur ersten Biegekante 24. Die Adjektive "untere" und "obere" beziehen sich auf die auf dem Zeichnungsblatt gezeigte Ausrichtung der Ableitschiene.

Die erste Ableitschiene 6 besitzt weiterhin eine erste Kröpfung 27, deren Biegewinkel etwa 45° aufweist. Eine andere, dritte Biegung weist einen Biegewinkel von 180° auf. Ihre Biegelinie 28 verläuft unter einem Winkel 45° gegenüber einer zweiten Kante 26. Eine weitere, vierte Biegung hat einen Biegewinkel von 90° und ihre Biegelinie 29 verläuft senkrecht zur zweiten Kante 26.

Die erste Ableitschiene 6 läuft im unteren Teil über die vierte Biegelinie 29 in einen ersten kurzen Abschnitt 73 aus. An diesem Abschnitt 73 der ersten Ableitschiene 6 sind erste durchgehende Öffnungen 32, nämlich eine runde und zwei ovale, angeordnet. Die erste Ableitschiene 6 besitzt ferner in ihrem unteren Teil eine erste Unterschneidung 30 und in ihrem oberen Teil eine zweite Unterschneidung 31.

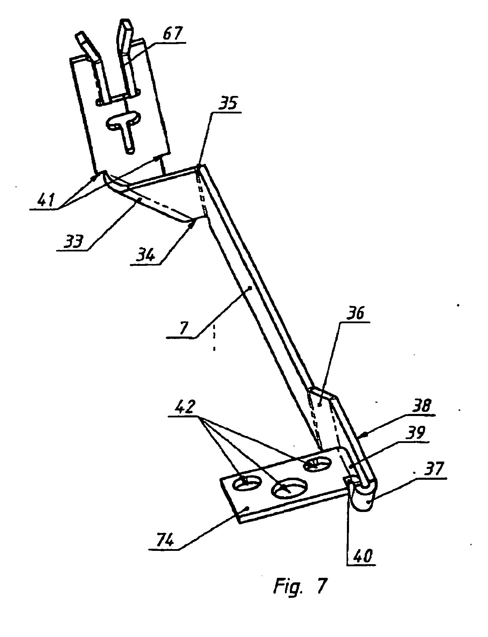

Die zweite Ableitschiene 7 gemäß Figur 7 besitzt in ihrem oberen Teil eine Biegung um einen Biegewinkel 180°, deren Biegelinie 33 unter einem Winkel 45° gegenüber einer Kante 34 festgelegt ist. Eine weitere Biegung hat einen Biegewinkel 90° und ihre Biegelinie 35 ist senkrecht zu der Kante 34 angeordnet. Die zweite Ableitschiene 7 besitzt darüber hinaus eine zweite Kröpfung 36.

Im unteren Teil der Ableitschiene 7 ist eine weitere Biegung mit einem Biegewinkel von 180° vorgesehen. Ihre Biegelinie 37 verläuft unter einem Winkel 45° gegenüber einer vierten Kante 38. Eine weitere Biegung hat einen Biegewinkel von 90°, und ihre Biegelinie 39 ist senkrecht zur Kante 34 angeordnet. Die Ableitschiene 7 läuft über die Biegelinie 39 in einen kurzen Abschnitt 74 aus, in den durchgehende Öffnungen 42, nämlich eine runde und zwei ovale angeordnet sind. Die Ableitschiene 7 besitzt in ihrem unteren Teil eine Unterschneidung 40 und in ihren oberen Teil eine Unterschneidung 41.

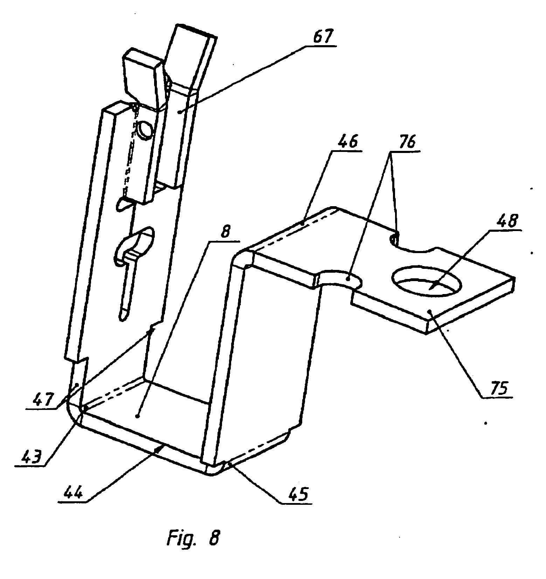

Die dritte Ableitschiene 8 gemäß Figur 8 besitzt in ihrem oberen Teil eine Biegung um einen Biegewinkel von 90°, deren Biegelinie 43 senkrecht zu einer Kante 44 liegt. Eine Biegung hat einen Biegewinkel von 90° Ihre Biegelinie 45 ist senkrecht zur Kante 44 angeordnet. Eine andere Biegung weist einen Winkel von 90° auf. Ihre Biegelinie 46 verläuft senkrecht gegenüber der Kante 44. Die dritte Ableitschiene 8 läuft über die Biegelinie 46 in einen kurzen dritten Abschnitt 75 aus. Die dritte Ableitschiene 8 besitzt Einkerbungen 47. Am dritten kurzen Abschnitt 75 der dritten Ableitschiene 8 ist eine runde Öffnung 48. Außerdem sind Einkerbungen 76 eingearbeitet.

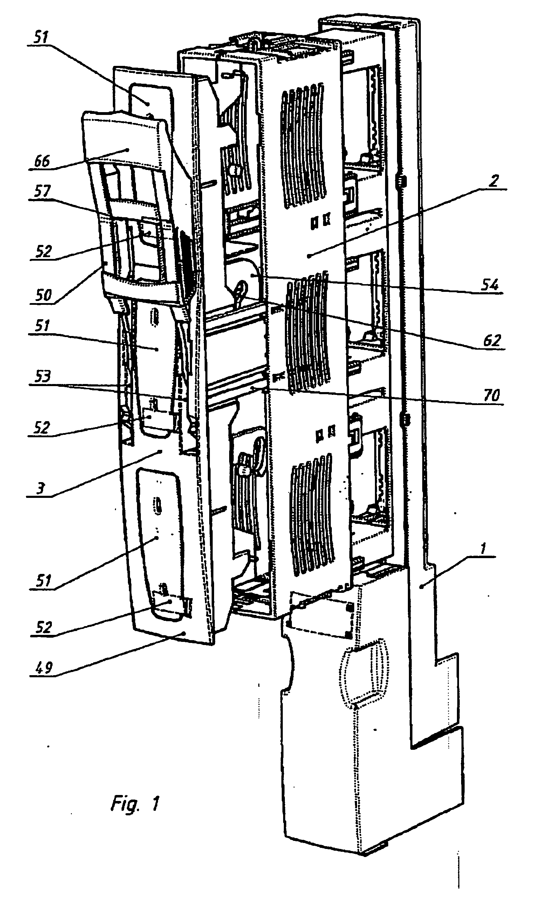

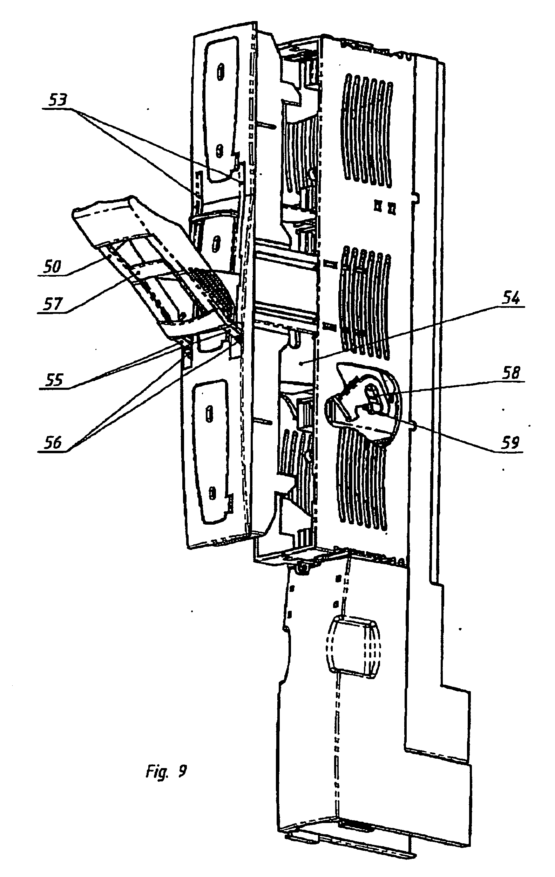

Die Deckeleinheit 3 umfasst einen Deckel 49, einen Handgriff 50, drei durchsichtige Abdeckungen 51 und Beschriftungselemente 52 (vgl. Fig. 1 und Fig. 9). An dem Deckel 49 sind zwei mit dem Handgriff 50 zusammenwirkende Schlitze 53 zur Aufnahme von Seitenteilen 54 des Handgriffes 50 angeordnet. Beim Einschalten werden die Seitenteile 54 längs der Schlitze 53 verschoben.

Auf der Außenseite des Deckels 49 sind entsprechend geformte zweite Anschlagelemente 56 angeordnet, welche zusammen mit den am Handgriff 50 angeordneten ersten Anschlagelementen 55 eines ersten Sperrelementes 57 eine Blockade bilden. Die ersten Anschlagelemente 55 des ersten Sperrelementes 57 stützen sich bei vollem Öffnen des Schaltergriffes an den zweiten Anschlagelementen 56 im Deckel 49 ab. Dies verhindert eine weitere Bewegung des Handgriffes 50. Bei dieser Lage des Handgriffes 50 haken die in den Seitenteilen 54 des Handgriffes 50 entsprechend geformten, ersten Aussparungen 58 an zweite Stifte 59 im Gehäuse 2 und verhindern dadurch das Herausnehmen der Deckeleinheit 3 aus dem Gehäuse 2.

Nach dem Anheben des Schaltergriffes und Drücken des ersten Sperrelementes 57 biegen sich gleichzeitig die sich im Handgriff 50 befindenden, federnden Schenkel, wodurch die ersten Anschlagelemente 55 des ersten Sperrelementes 57 im Handgriff 50 sich hinter die zweiten Anschlagelementen 56 im Deckel 49 positionieren und die ersten Aussparungen 58 in den Seitenteilen 54 des Handgriffes 50 sich aus den zweiten Stiften 59 lösen. Dies ermöglicht ein ungehindertes Herausnehmen der Deckeleinheit 3 aus dem Gehäuse 2.

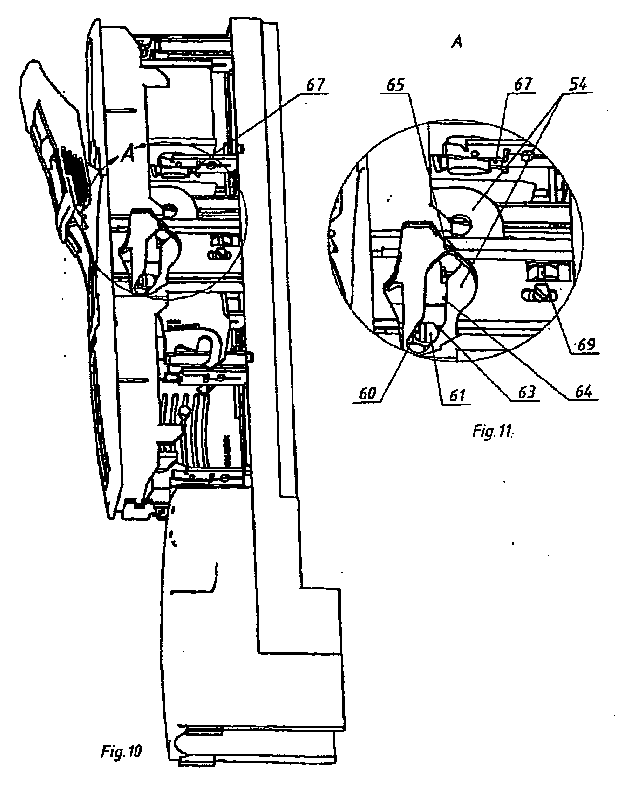

Auf den Innenseiten der Seitenelemente des Deckels 49 sind erste Stifte 60 mit den ersten Kragen 61 angeordnet, die mit den sich in den Seitenteilen 54 des Handgriffes 50 befindenden Aussparungen 62 zusammenwirken (vgl. Figuren 10 und 11).

Die S-förmigen Aussparungen 62 setzen sich aus drei Teilen zusammen. Das erste Teil 63 schließt sich unter Bildung eines stumpfen Winkels an das zweite Teil 64 an; das dritte Teil 65 schließt sich an ein Ende des zweiten Teils 64 an. Das erste und das zweite Teil 63, 64 sind entlang einer Geraden und das dritte Teil entlang eines Bogens geführt. Die Ausgestaltung der Aussparung verleiht die erforderliche Kraft, die auf ein Griffteil 66 während Trennungsprozesses des Schalters einwirken muss.

In den Seitenteilen 54 des Handgriffes 50 befinden sich weitere Stifte 78 mit Kragen 79, die mit den ovalen, an Seitenelementen des Deckels 49 angeordneten Öffnungen 77 kontaktieren. Während der Betätigung des Handgriffes bewirkt der Handgriff 50 eine Drehbewegung gegenüber einer Längsachse der Stifte 78 und zugleich eine Vor- und Rücklaufbewegung entlang der ovalen Öffnung 77 (vgl. Fig. 11).

An den Seitenteilen des Deckels 49 befinden sich rechteckige, mit einem zweiten Sperrelement 69 des Handgriffs 50 kontaktierende Öffnungen 68. Hierbei ist der Handgriff 50 einstückig mit dem zweiten Sperrelement 69.

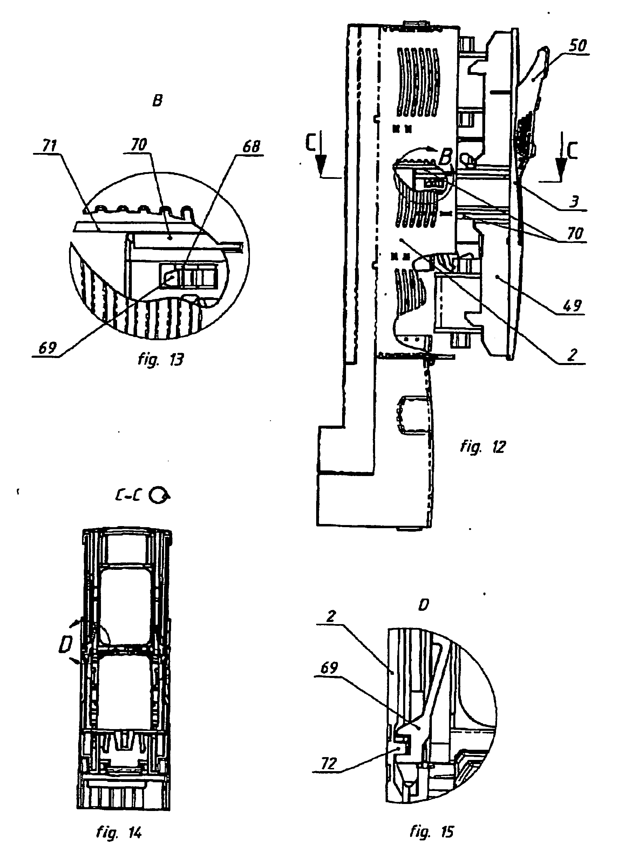

In Schließstellung des Trennschalters und nach dem Herausnehmen der Deckeleinheit 3 aus dem Gehäuse 2, wenn der Handgriff 50 sich in Schließstellung des Trennschalters befindet, rastet das zweite Sperrelement 69 in der rechteckigen Öffnung 68 in den Seitenteilen des Deckels ein. Die herausgenommene Deckeleinheit 3 mit dem Handgriff 50, der sich in der Schließstellung des Trennschalters befindet, kann ins Gehäuse 2 eingeschoben werden, indem das erste Führungselement 70 in die zweiten Führungselemente 71 ein geschoben wird. Dadurch rastet das zweite Sperrelement 69 an dem ersten Sperrvorsprung 72 am Gehäuse 2. So wird die Deckeleinheit 3 am Gehäuse 2 arretiert (vgl. Fig. 15). Der Zustand bedeutet die Ruhestellung oder Haltestellung des Trennschalters. Beim Ausüben einer entsprechenden Bewegung des Handgriffes 50, wie während der Trennung durch den Trennschalter, erfolgt das Aushaken und Lösen des zweiten Sperrelementes 69 aus dem ersten Sperrvorsprung 72 am Gehäuse 2. Dies ermöglicht das Herausnehmen der Deckeleinheit 3 aus dem Gehäuse 2 des Trennschalters.

## Patentansprüche

1. Sockeleinheit (1) für eine elektrische Schaltvorrichtung, letztere umfassend die Sockeleinheit und ein mit dieser verbundenes Gehäuse, wobei die Sockeleinheit (1) eine Sicherungsleiste (5) umfasst, in die wenigstens zwei Ableitschienen (6, 7) eingebaut sind, die in seitlichen Führungsnuten (13, 14) gehalten sind, **dadurch gekennzeichnet, dass** die Ableitschienen (6, 7) mittels Halteclipsen (15, 16, 17, 18), die Teil der Sicherungsleiste (5) sind, an der Sicherungsleiste (5) festgelegt sind.

2. Sockeleinheit nach Anspruch 1, **dadurch gekennzeichnet, dass** eine weitere Ableitschiene (8) über Führungselemente (20, 21) in einen Befestigungssitz eingeschoben ist, in dem sie über Haltclipse (22) gehalten ist.

3. Sockeleinheit nach Anspruch 1 oder 2, **dadurch gekennzeichnet, dass** die Ableitschienen (6, 7, 8)aus einem Flacheisen einstückig hergestellt sind.

4. Sockeleinheit nach Anspruch 3, dass die Ableitschienen (6,7) wie folgt geformt sind:
- in ihrem oberen Teil eine erste Drehbiegung um einem Winkel von 180°, deren Biegelinie (23; 33) unter einem Winkel von 45° gegenüber einen ersten Kante (24; 34) angeordnet ist,
- eine zweite Biegung mit einem Biegewinkel von 90°, deren Biegelinie (25; 35) senkrecht zur ersten Kante (24; 34) verläuft,
- eine dritte Biegung im unteren Teil mit einem Biegewinkel von 180° und mit einer Biegelinie (28; 37) in einem Winkel von 45° gegenüber der zweiten Kante (26) bzw. bezüglich einer vierten Kante (38)verlaufend,
- und eine vierte Biegung mit einem Biegewinkel von 90°, deren Biegelinie (29; 39) senkrecht zur zweiten Kante (26) bzw. zur ersten Kante (34) verläuft.

5. Sockeleinheit nach Anspruch 2 und 3, **dadurch gekennzeichnet, dass** die Ableitschienen (6,7,8) in ihrem unteren Teil und in ihrem oberen Teil jeweils eine Unterschneidung (30, 31; 40, 41) oder Einkerbung (47) aufweisen.

## Claims

1. Base unit (1) for an electrical switching device, the latter comprising the base unit and a housing connected thereto, wherein the base unit (1) includes a safety strip (5) into which at least two discharge rails (6, 7) are incorporated, the discharge rails being held in lateral guide grooves (13, 14), **characterised in that** the discharge rails (6, 7) are attached to the safety strip (5) by means of holding clips (15, 16, 17, 18) which are part of the safety strip (5).

2. Base unit as claimed in Claim 1, **characterised in that** a further discharge rail (8) is inserted into a fastening seat via guide elements (20, 21) and is held therein via holding clips (22).

3. Base unit as claimed in Claim 1 or 2, **characterised in that** the discharge rails (6, 7, 8) are produced in one piece from a flat iron.

4. Base unit as claimed in Claim 3, [**characterised in**] that the discharge rails (6, 7) are formed as follows:
- in its upper part a first rotary bend about an angle of 180°, whose bending line (23; 33) is at an angle of 45° with respect to a first edge (24; 34),
- a second bend having a bending angle of 90°, whose bending line (25; 35) extends perpendicular to the first edge (24; 34),
- a third bend in the lower part having a bending angle of 180° and having a bending line (28; 37) extending at an angle of 45° with respect to the second edge (26) or relative to a fourth edge (38),
- and a fourth bend having a bending angle of 90°, whose bending line (29; 39) extends perpendicular to the second edge (26) or to the first edge (34).

5. Base unit as claimed in Claim 2 and 3, **characterised in that** the discharge rails (6, 7, 8) comprise an undercut (30, 31; 40, 41) or notch (47) in each case in their lower part and in their upper part.

## Revendications

1. Unité de socle, dite aussi de base, d'un dispositif électrique de commutation, ce dernier comprenant l'unité de socle et un boîtier connecté à celle-ci, l'unité de socle (1) comprenant une baguette de retenue (5) dans laquelle sont montées au moins deux barres de dérivation (6, 7) qui sont tenues dans des rainures de guidage latérales (13, 14), **caractérisée en ce que** les barres de dérivation (6, 7) sont fixées sur la baguette de retenue (5) au moyen de clips de maintien ( 15, 16, 17, 18) qui font partie de la baguette de retenue (5).

2. Unité de socle selon la revendication 1 **caractérisée en ce qu'**une barre de dérivation additionnelle (8) est insérée à l'aide d'éléments de guidage (20, 21) dans un logement de fixation dans lequel elle est tenue à l'aide de clips de maintien (22).

3. Unité de socle selon la revendication 1 ou 2, **caractérisée en ce que** les barres de dérivation (6, 7, 8) sont fabriquées d'un seul tenant à partir d'un acier plat.

4. Unité de socle selon la revendication 3, **caractérisée en ce que** les barres de dérivation (6, 7) sont formées de la façon suivante:
dans leur partie supérieure, un premier pliage en arrondi d'un angle de 180° dont la ligne de pliage (23; 33) forme un angle de 45° avec une première arête (24; 34),
un deuxième pliage d'un angle de pliage de 90° dont la ligne de pliage (25; 35) est perpendiculaire à la première arête (24; 34),
dans la partie inférieure, un troisième pliage d'un angle de pliage de 180° dont la ligne de pliage (28; 37) forme un angle de 45° avec la deuxième arête (26), ou une quatrième arête (38), et
un quatrième pliage d'un angle de 90° dont la ligne de pliage (29; 39) est perpendiculaire à la deuxième arête (26) ou à la première arête (34).

5. Unité de socle selon la revendication 2 ou 3, **caractérisée en ce que** chaque barre de dérivation (6, 7, 8) comporte dans sa partie inférieure et dans sa partie supérieure un évidement (30, 31; 40, 41) ou une encoche (47).
